Europäisches Patentamt

European Patent Office

Office européen des brevets

(11) Publication number: **0 140 580**
**A2**

# (12) EUROPEAN PATENT APPLICATION

(21) Application number: **84306553.3**

(22) Date of filing: **26.09.84**

(51) Int. Cl.⁴: **H 02 M 3/335**, G 05 F 1/30

(30) Priority: **26.09.83 GB 8325703**

(43) Date of publication of application: **08.05.85**
**Bulletin 85/19**

(84) Designated Contracting States: **BE DE FR IT NL**

(71) Applicant: **Farnell Instruments Limited, Farnell House Forge Lane, Leeds LS12 2NE (GB)**

(72) Inventor: **Parkinson, Kenneth, 15 Meyrick Avenue, Wetherby West Yorkshire (GB)**

(74) Representative: **Horton, Andrew Robert Grant et al, BOULT, WADE & TENNANT 27 Furnival Street, London, EC4A 1PQ (GB)**

(54) **Power supply.**

(57) A power supply comprises a pair of primary windings (21, 22) connected in anti-parallel across a bridge rectifier (23). A number of secondary windings of the transformer are connected to apply predetermined rectified voltages to a plurality of output terminals (26 A–F). One output terminal (26C) is designated the regulated terminal and has its output monitored through a control loop (28–30) in order to vary the duty ratio of a transistor (25) connected in series with one of the primary windings.

A further secondary coil (6) of the transformer is connected to a rectifying and filtering circuit (8–11) to provide a voltage indicative of variations in the power flow through the transformer. The voltage is compared with a reference voltage to alter the resistance of a limiting transformer (1) connected in series with the regulated output. Thus, a second control loop is provided to reduce the variation in the duty ratio of the transformer in the primary winding to increase thereby the stability of all the output terminals.

0140580

- 1 -

POWER SUPPLY

This invention relates to power supplies and in particular to those providing substantially stable direct current output voltages.

Known power supplies for providing a substantially stable direct current output voltage comprise a rectification circuit, for connection to a source of alternating current, which is connected to supply respective predetermined rectified voltages to at least two output terminals. One of the terminals is known as the regulated terminal since the voltage thereat is used within a control loop to provide an error signal for regulating the current flow to the alternating current side of the rectification circuit. Typically the regulated terminal is the low voltage, high current output terminal.

This control loop provides a regulated terminal which is well regulated against the effects of voltage change in the AC source and load changes at its terminals. However, the effects of control of the voltage appearing at the regulated terminal carry over to produce variation in the voltage appearing at the other output terminals of the power supply.

In order to overcome the above problem it is known to provide a control loop for each and every output terminal. The voltage at each and every terminal is compared with a respective reference voltage to produce an error signal which can control the output voltage appearing at the output terminal. However, such a solution requires a considerable number of components and necessitates a control loop for each and every output terminal. Consequently, the cost in terms of components and increase in size of the power supply unit can make this solution prohibitive.

It is an object of the invention to provide a simple and cost effective power supply wherein change in the load at the regulated terminal has a reduced effect of change in the output voltages of other terminals.

According to the invention there is provided a a power supply having a regulated output terminal and a plurality of unregulated output terminals and comprising:- a rectification circuit having a primary circuit for connection to a source of alternating current and a secondary circuit connected to supply predetermined voltages to each of the terminals; a current transformer connected in series between the regulated terminal and the secondary circuit; the power supply including a first control circuit having a power controller responsive to deviation of the output voltage at the regulated terminal and connected to vary power flow in the primary circuit to reduce said deviation, variations in primary circuit power flow destabilizing the predetermined voltages at the unregulated outputs, and a second control circuit having means responsive to variation of power flow in the primary circuit and connected to vary voltage across the current transformer to reduce said deviation and reduce thereby said variation in primary circuit power flow.

Consequently, the second control circuit in combination with the current transformer acts as a regulator on the regulated terminal so that any deviation of the output voltage thereat due to load change on this terminal produces an opposing variation derived from the power flow in the primary circuit. Therefore, any voltage variation on the regulated terminal is opposed by the second control circuit. As a result, by providing a second control circuit to vary the voltage across the current transformer connected in series between the regulated terminal and the secondary circuit a simple and cost effective improvement is provided to increase the stability of all the output terminals. Preferably, the current transformer has primary windings connected in series between the regulated output and the secondary circuit and secondary windings connected to the second control circuit. Conveniently, the second control circuit comprises a series connected transistor and resistor, together connected in parallel with the secondary windings, and a comparator circuit connected to supply the transistor control terminal with control signals derived from a comparison of a signal indicative of variations in the power flow in the primary circuit and a predetermined signal level.

In a preferred embodiment the power supply includes a limiting circuit connected between the second control circuit and the power controller and responsive to current flow to said regulated terminal above a predetermined threshold to reduce power flow through the rectification circuits. In this way the use of a current transformer provides a control on the maximum current available from the regulated terminal.

Preferably, the power controller comprises a switching transistor operated by a pulse width modulation unit responsive to said deviation. The first control circuit can comprise a comparator circuit connected to said regulated terminal and connected to a predetermined voltage level to produce a control signal for application to the pulse width modulation unit which is indicative of said deviation. Conveniently an opto-isolating unit connected between the pulse width modulation unit and the first control circuit comparator circuit.

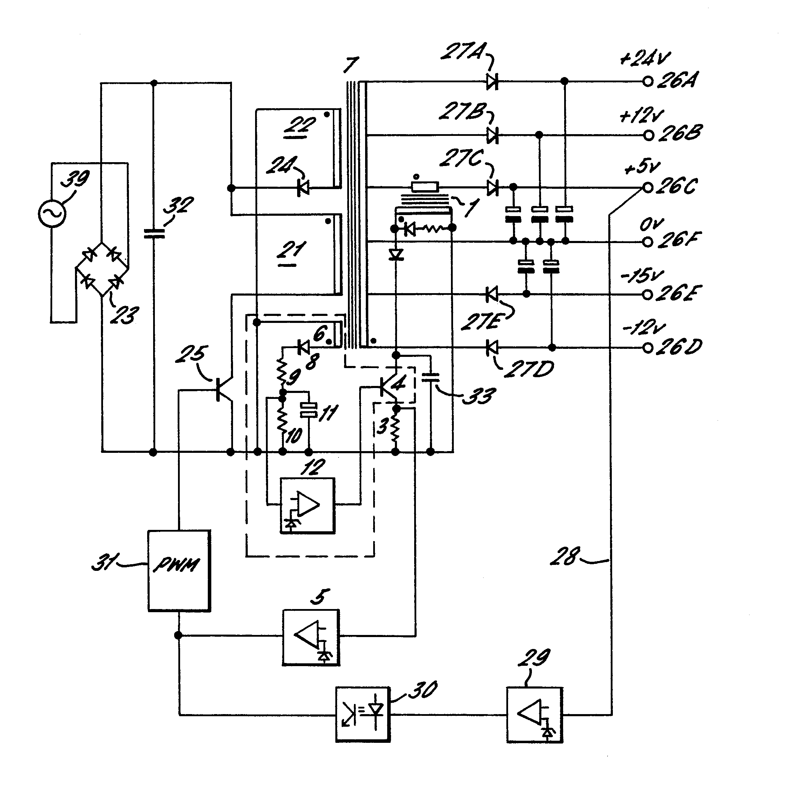

Examples of the present invention will now be described with reference to the accompanying drawing which illustrates a power supply embodying the invention.

Referring to the drawing, the power supply embodying the invention includes a rectification circuit comprising a transformer 7 having primary windings 21 and 22 connected in anti-parallel across a bridge rectifier 23. A reservoir capacitor 32 is connected across the output of the bridge rectifier 23. The bridge rectifier is connected to a source 39 of AC having known voltage V. The winding 22 icludes a diode 24 in series therewith and winding 23 includes switching transistor 25 in series therewith. The control terminal of the transistor 25 is connected to a pulse width modulation unit 31.

The transformer 7 has a number of secondary windings connected to apply required predetermined rectified voltages to output terminals 26 A-F. Output terminal 26 F is arranged to have zero potential with respect to the other terminals, each of which includes a series connected diode 26 A-E respectively.

Output terminal 26 C is designated the regulated terminal since its output is monitored on a line 28 by an error comparator 29 which is connected to a reference voltage source. If the output voltage appearing at terminal 26 C deviates from the predetermined reference value, the comparator produces an error signal which is fed through an opto-isolator 30 to the pulse width modulation unit 31. The modulation unit applies control signals to the transistor 25 to vary the duty ratio of the transistor 25 in accordance with the size of the error signals from the comparator 29.

It is known in the art that variations in output voltage on the regulated terminal due to variation in voltage V and change in load at the terminal 26 C can be reduced by use of the above described control loop including comparator 29. It is also known that this control loop regulates the remaining outputs 26 A, B, D-F against variation in voltage V. However the duty ratio of transistor 25 increases as the load on the terminal 26 increases, which produces a consequent increase in the other voltages appearing at terminals 26 A, B, D-F.

A single control loop is provided to increase the stability of these terminals. The second control loop is connected to a further secondary coil 6 which provides an indication of variations in the power flow through the transformer 7. The secondary coil 6 is connected across a rectifying and filtering circuit 8, 9, 10, 11 and a DC voltage derived from this circuit is applied to a comparator 12 for comparison with a further reference voltage. The secondary coil 6 produces a voltage proportional to the power flow in the primary windings of the transformer 7 so that the output of comparator 12 is a signal proportional to the amplified error between the DC voltage and the further reference voltage. This signal is then used to reduce the variation in duty ratio due to load variation on the regulated terminal 26 C as described herein below.

A current transfomer 1 is connected in series between the diode 27 C and the transfomer 7. A series connected transistor 4 and resistor 3 are connected in parallel with the secondary windings of the transformer 1. The output of the comparator 12 is applied to the control terminal of the transistor 4 to vary the resistive load across the secondary windings of the transformer 1. The primary voltage of the current transformer 1 is determined by the voltage drop across the secondary winding resistive load multiplied by the turns ratio.

Therefore by applying a control signal to the transistor 4 it is possible to vary the voltage across the primary windings of the transformer 1 to reduce the deviation of the voltage appearing at the regulated terminal 26 C from its predetermined reference value. Therefore the action of the second control loop is to reduce the variation in the duty ratio of the transistor 25 due to regulated output terminal load variation. The second control loop therefore introduces a voltage change in the regulated output circuit which opposes the voltage change due to the regulated output terminal load change. A capacitor 33 is connected in parallel with the transistor 4 and resistor 3 in order to smooth the pulsed nature of the current flowing through them.

Preferably the voltage across the resistor 3 is applied to a current limiter 5 which is connected to pulse width modulation unit 31 and limits the current available at terminal 26 C.

It will be apparent that although a single ended fly-back type power supply is illustrated the invention can be applied to other multi output switched mode systems such as single ended forward and push pull types. The signal for application to comparator 12 can be derived from any means producing a signal indicative of the power flow through the transformer 7 including any one of the uncontrolled output voltages appearing at terminals 26 A, B, D to F. A rectification circuit other than transformer 7 could also be used. It will also be apparent that although outputs sharing a common return terminal (26 F) are illustrated, totally isolated outputs, i.e. outputs with individual return terminals could also be used.

0140580

CLAIMS:

1. A power supply having a regulated output terminal and a plurality of unregulated output terminals and comprising:-

a rectification circuit having a primary circuit for connection to a source of alternating current and a secondary circuit connected to supply predetermined voltages to each of the terminals;

a current transformer connected in series between the regulated terminal and the secondary circuit;

the power supply including a first control circuit having a power controller responsive to deviation of the output voltage at the regulated terminal and connected to vary power flow in the primary circuit to reduce said deviation, variations in primary circuit power flow destabilizing the predetermined voltages at the unregulated outputs, and a second control circuit having means responsive to variation of power flow in the primary circuit and connected to vary voltage across the circuit transformer to reduce said deviation and reduce thereby said variation in primary circuit power flow.

0140580

2. A power supply as claimed in Claim 1, wherein the current transformer has primary windings connected in series between the regulated terminal and the secondary circuit and secondary windings connected to the second control circuit.

3. A power supply as claimed in Claim 2, wherein the second control circuit comprises a series connected transistor and resistor, together connected in parallel with said secondary windings, and a comparator circuit connected to supply the transistor control terminal with control signals derived from a comparison of a signal indicative of variation of power flow in the primary circuit with a predetermined signal level.

4. A power supply as claimed in any preceding claim, including a limiting circuit connected between the second control circuit and the power controller and responsive to current flow to said regulated terminal above a predetermined threshold to reduce power flow through the rectification circuits.

5. A power supply as claimed in any preceding claim, wherein the power controller comprises a switching transistor operated by a pulse width modulation unit responsive to said deviation.

6. A power supply as claimed in Claim 5, wherein the first control circuit includes a comparator circuit connected to said regulated terminal and connected to a predetermined voltage level to produce a control signal for application to the pulse width modulation unit which is indicative of said deviation.

7. A power supply as claimed in Claim 6, including an opto isolating unit connected between the pulse width modulation unit and the first control circuit comparator circuit.